# EUROPEAN PATENT SPECIFICATION

(11) **EP 3 670 914 B1**
(45) Date of publication and mention of the grant of the patent: **29.12.2021**
(21) Application number: 18845989.5
(22) Date of filing: 13.08.2018
(51) Int. Cl.: F04B 53/04, F04B 53/10, F04B 53/16, F04B 43/12

(54) **PUMP ASSEMBLY, PUMP, SPRINKLER SYSTEM, AND UNMANNED AERIAL VEHICLE**
PUMPENANORDNUNG, PUMPE, SPRINKLERSYSTEM UND UNBEMANNTES LUFTFAHRZEUG
ENSEMBLE POMPE, POMPE, SYSTÈME D'ARROSAGE ET VÉHICULE AÉRIEN SANS PILOTE

(30) Priority: 16.08.2017 CN 201710703608
(43) Date of publication of application: 24.06.2020
(73) Proprietor: Guangzhou Xaircraft Technology Co., Ltd., Tianhe District Guangzhou Guangdong 510000 (CN)
(72) Inventor: XIAO, Dingfeng, Guangzhou, Guangdong 510000 (CN); CHEN, Zhang, Guangzhou, Guangdong 510000 (CN); HE, Jianbing, Guangzhou, Guangdong 510000 (CN); ZHENG, Wen, Guangzhou, Guangdong 510000 (CN)
(74) Representative: Novagraaf Technologies
(86) International application number: PCT/CN2018/100287
(87) International publication number: WO 2019/034020

(56) References cited:
- CN-A- 101 644 254
- CN-A- 103 874 856
- CN-A- 104 500 384
- CN-A- 106 837 754
- CN-U- 206 190 494
- CN-U- 207 064 212
- CN-U- 207 064 232
- CN-U- 207 145 311
- DE-A1- 10 158 343
- JP-A- 2000 130 335

## Description

### Technical Field

The present disclosure belongs to a technical field of unmanned aerial vehicles, and more particularly relates to a pump body assembly, a pump, a sprinkler system, and an unmanned aerial vehicle.

### Background

During a working process of a pump of an unmanned aerial vehicle known to inventors, under a limitation of a structure of a pump body assembly, when a liquid medium leaks due to a broken pipe in the pump body assembly, the liquid medium inside the pump body assembly does not be discharged in time, which will cause a corrosion of the pump body assembly or short circuit of electronic components inside the pump, thereby greatly reducing the working efficiency and service life of the pump.

CN103874856A relates to a pump body assembly for a roller peristaltic pump, the pump body assembly being provided with a breathing pipe. If during use the peristaltic tube breaks, leakages accumulate in storage around the breathing pipe. If liquid level rises higher that the entrance of the breathing pipe, liquid is discharged through a drainage outlet.

### Summary

Some embodiments of the present disclosure provide a pump body assembly, which solves a technical problem that a liquid medium leaking out of a pump body known to the inventors does not be discharged in time.

Some embodiments of the present disclosure provide a pump body assembly, the pump body assembly includes: a pump housing, provided with a drainage outlet for discharging liquid; and
a valve core member, including a fixing portion and a valve body portion connected with the fixing portion, the fixing portion is fixed to the pump housing, the valve body portion is elastic, and the valve body portion is changeable from a natural state to an elastic deformation state under an action of liquid in the pump housing, wherein when the valve body portion is in the natural state, the valve body portion seals the drainage outlet of the pump housing, and when the valve body portion is in the elastic deformation state, the valve body portion does not seal the drainage outlet of the pump housing.

In an exemplary embodiment, the fixing portion and the valve body portion are formed integrally.

In an exemplary embodiment, a side surface of the valve body portion facing the fixing portion is a curved surface recessed toward the fixing portion.

In an exemplary embodiment, the fixing portion includes a first fixing portion and a second fixing portion spaced apart from the first fixing portion. The pump body assembly further includes a roller set rotatably mounted in the pump housing and a pump body hose wound around the roller set for squeezing the roller set. A first fixing hole corresponding to the first fixing portion and a second fixing hole corresponding to the second fixing portion are provided on the pump housing. The first fixing hole and the second fixing hole are located on both sides of the roller set. The first fixing portion is fixed to the first fixing hole. The second fixing portion is fixed to the second fixing hole.

In an exemplary embodiment, the pump housing includes an annular wall and a connecting wall connected to the annular wall. The connecting wall may be provided with the first fixing hole, the second fixing hole and the drainage outlet.

In an exemplary embodiment, the pump body assembly further includes a sealing bulge disposed on the connecting wall. When the valve body portion is in the natural state, the valve body portion is overlapped with the sealing bulge to seal the drainage outlet of the pump housing.

In an exemplary embodiment, the pump body assembly further includes a top cover. The top cover is detachably connected with an outer side of the annular wall. The top cover is provided with a communication hole for draining liquid.

In an exemplary embodiment, the pump body assembly further includes a base. The base is connected to a bottom of the pump housing to form a mounting cavity between the pump housing and the base. The pump body assembly further includes a sealing member sandwiched between the base and the pump housing and configured to seal the pump housing and the base.

Some embodiments of the present disclosure provide a pump, which includes the foregoing pump body assembly.

Some embodiments of the present disclosure provide a sprinkler system, which includes the foregoing pump.

Some embodiments of the present disclosure provide an unmanned aerial vehicle, which includes the foregoing sprinkler system.

Compared with the art known to the inventors, the technical effects of some embodiments of the present disclosure are as follows. By providing a drainage outlet on a pump housing, when a liquid medium leaks due to a broken pipe in a pump body assembly, a valve body portion of a valve core member changes from a natural state to an elastic deformation state under an action of liquid in the pump housing. That is, the valve core member is opened and closed to make the drainage outlet form a sealed state and an unsealed state, so that the liquid is drained out of the drainage outlet in time, thereby avoiding the corrosion of the pump body assembly or short circuit of electronic components inside a pump. Moreover, as the valve body portion is in the natural state, the valve body portion seals the drainage outlet of the pump housing, and the valve core member drains water in the pump housing in one direction. Meanwhile, external water and dust are also prevented from entering the pump body assembly, so that the pump body assembly has good waterproof and dustproof effects, thereby improving the working efficiency and service life of the pump.

### Brief Description of the Drawings

In order to more clearly illustrate the technical solutions in the embodiments of the present disclosure, the drawings used in the description of the embodiments of the present disclosure or the conventional art will be briefly described below. It is apparent that the drawings in the following description are only some embodiments of the present disclosure, and other drawings are obtained from those skilled in the art according to these drawings without any creative work.
Fig. 1 illustrates a stereogram of a pump according to an embodiment of the present disclosure;
Fig. 2 illustrates a schematic structural diagram of a base of a pump body assembly according to an embodiment of the present disclosure;
Fig. 3 illustrates a first stereogram of a pump housing of a pump body assembly according to an embodiment of the present disclosure;
Fig. 4 illustrates a second stereogram of a pump housing of a pump body assembly according to an embodiment of the present disclosure;
Fig. 5 illustrates a schematic structural diagram of a top cover of a pump body assembly according to an embodiment of the present disclosure;
Fig. 6 illustrates a first stereogram of a roller set of a pump body assembly according to an embodiment of the present disclosure;
Fig. 7 illustrates a second stereogram of a roller set of a pump body assembly according to an embodiment of the present disclosure;
Fig. 8 illustrates a schematic structural diagram of a pipe connecting member of a pump body assembly according to an embodiment of the present disclosure;
Fig. 9 illustrates a schematic structural diagram of a sealing member of a pump body assembly according to an embodiment of the present disclosure;
Fig. 10 illustrates a schematic structural diagram of a valve core member of a pump body assembly according to an embodiment of the present disclosure; and
Fig. 11 illustrates a schematic structural diagram of a shell body according to an embodiment of the present disclosure.

Description of the reference signs:
In the drawings: 1, housing assembly; 11, base; 110, through-hole; 111, supporting portion; 1111, second sealing rib; 112, receiving portion; 12, pump housing; 121, mounting portion; 122, extending portion; 1221, top plate; 1222, side plate; 123, connecting portion; 1231, annular wall; 1232, connecting wall; 1233, positioning column; 1234, first fixing hole; 1235, drainage outlet; 1236, second fixing hole; 1237, sealing bulge; 124, second limiting groove; 1241, first sealing rib; 1242, second limiting hole; 125, second sealing groove; 13, top cover; 131, communication hole; 2, roller set; 201, positioning hole; 202, matching hole; 21, roller bracket; 211, cover plate; 212, rotating shaft; 213, connecting plate; 22, roller; 3, pipe connecting member; 31, limiting base; 311, first limiting groove; 32, pipe connecting portion; 321, limiting bulge; 4, sealing member; 41, first sealing portion; 411, first sealing groove; 412, first limiting hole; 42, second sealing portion; 5, valve core member; 51, valve body portion; 52, fixing portion; 521, first fixing portion; 522, second fixing portion; 6, mounting shell; 61, shell body; 610, through hole; 611 substrate; 612, upper shell; 613, lower shell; 62, shell bottom assembly; 621, bottom pad; 622, circuit board; 623, bottom cover; 7, power device; 71, driving member; 711, transmission shaft; 72, transmission device.

### Detailed Description of the Embodiments

The embodiments of the present disclosure are described in detail below, and the examples of the embodiments are illustrated in the drawings, where the same or similar reference numerals are used to refer to the same or similar elements or elements having the same or similar functions. The embodiments described below with reference to the drawings are intended to be illustrative of the present disclosure and are not to be construed as limiting the present disclosure.

In the description of some embodiments of the present disclosure, it is to be understood that the orientations or positional relationships indicated by terms "length", "width", "upper", "lower", "front", "rear", "left", "right", "vertical", "horizontal", "top", "bottom", "inner", "outer" and the like are the orientations or positional relationships shown in the drawings, and are only for the convenience of describing the present disclosure and simplifying the description, rather than indicating or implying that devices or elements must have a specific orientation and must be constructed and operated in a specific orientation, and therefore it should not be construed as limiting the present disclosure.

In addition, terms "first" and "second" are only adopted for description and should not be understood to indicate or imply relative importance or implicitly indicate the number of indicated technical features. Therefore, a feature defined by "first" and "second" may explicitly or implicitly indicate inclusion of one or more of such features. In the descriptions of the present disclosure, "multiple" means two or more, unless otherwise limited definitely and specifically.

In the present disclosure, unless otherwise specified and limited, terms "mounting", "connected" and "connection", "fixed" and the like should be generally understood. For example, the term may be fixed connection or detachable connection or integral connection, the term may be mechanical connection or electrical connection, and the term may be direct connection or indirect connection through an intermediate or communication inside two elements or interaction between two elements. Those of ordinary skill in the art can understand specific implications of the above terms in the present disclosure in specific situations.

In order to make the purposes, technical solutions and advantages of some embodiments of the present disclosure clearer, the present disclosure will be further described in detail below with reference to the accompanying drawings and embodiments.

Some embodiments of the present disclosure provide a pump body assembly. A drainage outlet 1235 is provided on a pump housing 12 and a valve core member 5 is provided. The valve core member 5 is opened and closed to make the drainage outlet 1235 form an on and closed state. When a liquid medium leaks due to a broken pipe, the valve core member 5 is opened under an action of the liquid medium, the drainage outlet 1235 is turned on, and the liquid medium is discharged in time from the drainage outlet 1235 on the pump housing 12. Under normal circumstances, the valve core member 5 is closed, and the pump body assembly has good waterproof and dustproof effects, thereby improving a working efficiency and service life of a pump.

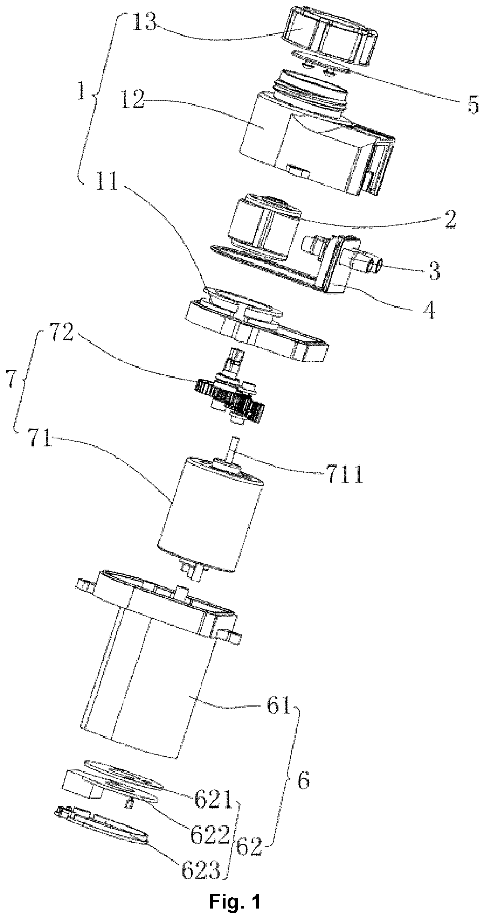

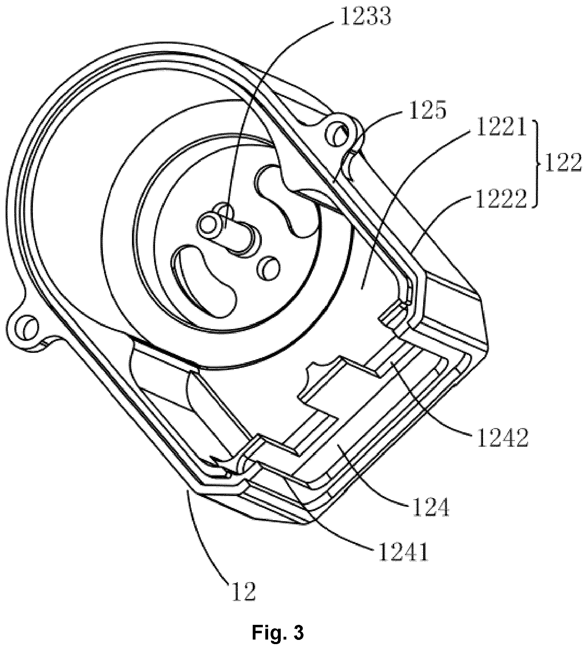

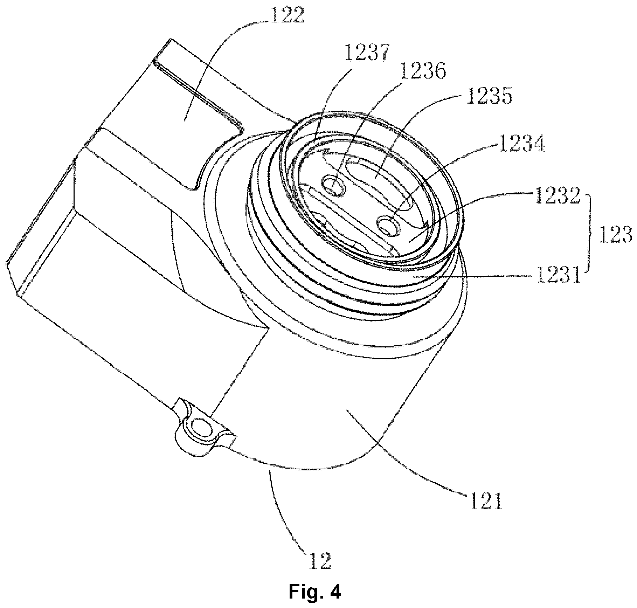

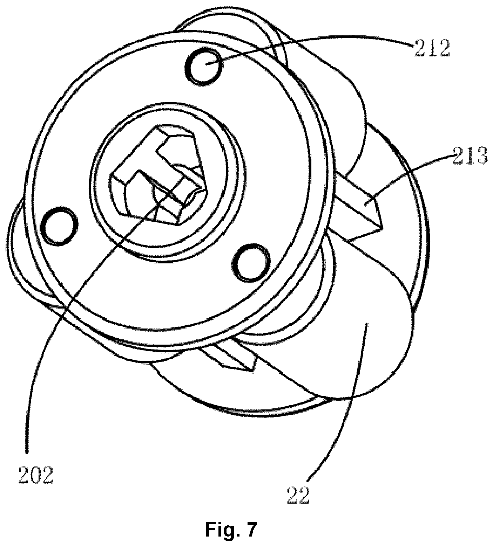

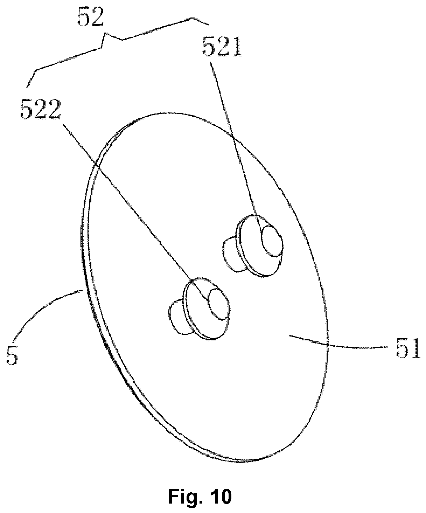

Referring to Fig. 1 to Fig. 11, in some embodiments, the pump body assembly includes a pump housing 12 and a valve core member 5. The pump housing 12 is provided with a drainage outlet 1235 for discharging liquid. The valve core member 5 includes a fixing portion 52 and a valve body portion 51 connected with the fixing portion 52. The fixing portion 52 is fixed to the pump housing 12. The valve body portion 51 is elastic. The valve body portion 51 is changeable from a natural state to an elastic deformation state under an action of liquid in the pump housing 12. When the valve body portion 51 is in the natural state, the valve body portion 51 seals the drainage outlet 1235 of the pump housing 12. When the valve body portion 51 is in the elastic deformation state, the valve body portion 51 does not seal the drainage outlet 1235 of the pump housing 12.

According to the pump body assembly provided by the embodiments of the present disclosure, by providing the drainage outlet 1235 on the pump housing 12, when a liquid medium leaks due to that a pipe in the pump body assembly is broken, the valve body portion 51 of the valve core member 5 changes from a natural state to an elastic deformation state under an action of liquid in the pump housing 12. That is, the valve core member 5 is opened and closed to make the drainage outlet 1235 form a sealed state and an unsealed state, so that the liquid is drained out from the drainage outlet 1235 in time, thereby avoiding the corrosion of the pump body assembly or short circuit of electronic components inside a pump. Moreover, as the valve body portion 51 is in the natural state, the valve body portion 51 seals the drainage outlet 1235 of the pump housing 12, and the valve core member 5 drains water in the pump housing 12 in one direction. Meanwhile, external water and dust are also prevented from entering the pump body assembly, so that the pump body assembly has good waterproof and dustproof effects, thereby improving the working efficiency and service life of the pump.

In some embodiments, the fixing portion 52 and the valve body portion 51 are formed integrally, so that the valve core member 5 has a good overall performance and is convenient to use. A side surface of the valve body portion 51 facing the fixing portion 52 is a curved surface recessed toward the fixing portion 52, so that the valve body portion 51 changes from the natural state to the elastic deformation state under the action of liquid in the pump housing 12. In some embodiments, the fixing portion 52 includes a first fixing portion 521 and a second fixing portion 522 spaced apart from the first fixing portion 521. The pump body assembly further includes a roller set 2 rotatably mounted in the pump housing 12 and a pump body hose wound around the roller set 2 for squeezing the roller set 2. A first fixing hole 1234 corresponding to the first fixing portion 521 and a second fixing hole 1236 corresponding to the second fixing portion 522 are provided on the pump housing 12. The first fixing hole 1234 and the second fixing hole 1236 are located on both sides of the roller set 2. The first fixing portion 521 is fixed to the first fixing hole 1234. The second fixing portion 522 is fixed to the second fixing hole 1236. Therefore, by positioning the first fixing hole 1234 and the second fixing hole 1236 on both sides of the roller set 2, the connection strength of the roller set 2 is not affected during use.

In some embodiments, the pump housing 12 includes an annular wall 1231 and a connecting wall 1232 connected to the annular wall 1231. The connecting wall 1232 is provided with the first fixing hole 1234, the second fixing hole 1236 and the drainage outlet 1235. The connecting wall 1232 is further provided with a sealing bulge 1237. When the valve body portion 51 is in the natural state, the valve body portion 51 is overlapped with the sealing bulge 1237 to seal the drainage outlet 1235 of the pump housing 12.

In addition, some embodiments of the present disclosure provide a pump, which includes the foregoing pump body assembly. The pump further includes a power assembly connected with the pump body assembly and configured to drive the pump body assembly. It is to be noted that some embodiments of the present disclosure are applicable to a peristaltic pump. The peristaltic pump is a novel industrial pump, which is a liquid driving device, widely used in various industries, and configured to transport some sensitive, thick, corrosive liquid media.

In some embodiments, the pump body assembly further includes a top cover 13. The top cover 13 is detachably connected with an outer side of the annular wall 1231. The top cover 13 is provided with a communication hole 131 for draining liquid. In some embodiments, the pump body assembly further includes a base 11. The base 11 is connected to a bottom of the pump housing 12 to form a mounting cavity between the pump housing 12 and the base 11.

In some embodiments, in order to better solve a drainage problem of the pump body assembly, the valve body portion 51 is formed in a disc shape, and an outer periphery of the valve body portion is overlapped with the sealing bulge 1237. Since the outer periphery of the valve body portion 51 is overlapped with the sealing bulge 1237, the fixing portion 52 has a better sealing effect on the valve body portion 51.

In some embodiments, the pump housing 12 includes a mounting portion 121 connected with the base 11 and configured to receive the roller set 2, an extending portion 122 extending from a radial direction of the mounting portion 121 and configured to connect the base 11, and a connecting portion 123 extending from an axial direction of the mounting portion 121 and configured to connect the top cover 13.

In some embodiments, the pump housing 12 is fixed above the base 11. The mounting portion 121 is a cylindrical cover of which a side and a bottom are open and a top has a center hole. The extending portion 122 extends along the radial direction of the mounting portion 121 from an opening in the side of the mounting portion 121. In some embodiments, the extending portion 122 includes a top plate 1221 and side plates 1222 extending downward from both sides of the top plate 1221. One end of the top plate 1221 is connected with the mounting portion 121, and the other end of the top plate 1221 extends away from the mounting portion 121. The rear end of the top plate 1221 is connected with the mounting portion 121, and a front end of the top plate 1221 extends away from the mounting portion 121. The two side plates 1222 extend downward from the left and right sides of the top plate 1221, respectively. In some embodiments, the connecting portion 123 includes an annular wall 1231 extending upward from a top of the mounting portion 121 and a connecting wall 1232 connected to an inside of the annular wall 1231 and configured to connect the roller set 2. Specifically, the drainage outlet 1235 and the fixing portion 52 are provided on the connecting wall 1232. The annular wall 1231 extends upward from an outer periphery of the center hole on the top of the mounting portion 121.

In some embodiments, the pump body assembly includes a roller set 2 and a pipe wound between the roller set 2 and the pump housing 12 and rotatably squeezed by the roller set 2 to pump the liquid medium.

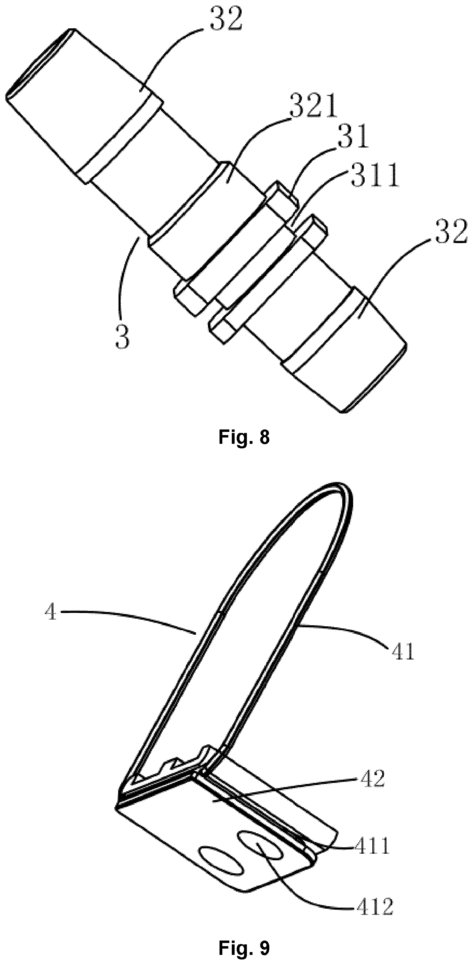

In some embodiments, referring to Fig. 1 and Fig. 9, considering that water or dust easily enters a joint between the pump housing 12 and the base 11 of the pump body assembly. The pump body assembly further includes a sealing member 4 sandwiched between the base 11 and the pump housing 12 and configured to seal the pump housing 12 and the base 11. The pump housing 12 and the base 11 are sealed through the sealing member 4 to prevent water and dust, so that the pump body assembly has good waterproof and dustproof effects. In order to further enhance a tightness of a connection between the sealing member 4 and the pump housing 12 and ensure that the sealing member 4 has better waterproof and dustproof effects, in some embodiments, the sealing member 4 includes a first sealing portion 41 that cooperates with the pump housing 12 and the base 11 and a second sealing portion 42 that cooperates with the first sealing portion 41 and is accommodated in the pump housing 12. A first sealing groove 411 is formed on a side wall of the first sealing portion 41, and a first sealing rib 1241 cooperating with the first sealing groove 411 is formed on the pump housing 12. The first sealing portion 41 is also provided with a first limiting hole 412. A limiting bulge 321 cooperating with the first limiting hole 412 is formed on the pipe. In some embodiments of the present disclosure, the second sealing portion 42 and the first sealing portion 41 are formed integrally. In some embodiments, the first sealing portion 41 includes a sealing block that matches the pump housing 12 and a sealing gasket that is disposed at one end of the sealing block and matches the pump housing 12 and the base 11. Wherein, the extending portion 122 of the pump housing is connected with the sealing member 4.

In some embodiments, referring to Fig. 1 and Fig. 8, considering that the liquid medium is conveniently pumped under a rotary squeezing of the roller set 2, the pipe includes a pump body hose wound between the roller set 2 and the pump housing 12 and a pipe connecting member 3 communicating with both ends of the pump body hose and penetrating in the sealing member 4. In some embodiments, the pipe connecting member 3 includes two pipe bodies spaced apart on the sealing member 4. Each of the pipe body includes a limiting base 31 matching with the sealing member 4 and a pipe connecting portion 32 connected to two end faces in a thickness direction of the limiting base 31.

In addition, in order to facilitate a close fit with the pump housing 12, a first limiting groove 311 cooperating with the pump housing 12 is formed on the pipe connecting member 3. A second limiting hole 1242 cooperating with the first limiting groove 311 is provided on the pump housing 12. In some embodiments, the first limiting groove 311 is formed on a peripheral side wall of the limiting base 31 of the pipe connecting member 3. Further, the pipe connecting portion 32 is formed as a pagoda-shaped connector. In some embodiments, the first limiting groove 311 is adapted to fit on the second limiting hole 1242. One of the two pipe connecting portions 32 is formed with a limiting bulge 321 on an outer peripheral wall of an end face of the limiting base 31. Each of the two pipe connecting portions 32 is formed as a pagoda-shaped connector.

In order to facilitate the connection between the pump body hose and the pipe connecting member 3, in some embodiments, the pump body hose includes a main body portion sandwiched between a side wall of the pump housing 12 and the roller set 2 and connecting end portions connected with the two pipe connecting portions 32 respectively. In some embodiments, the connecting end portions include a left end portion and a right end portion. The main body is arc-shaped and is sandwiched between a side wall of the mounting portion 121 and the roller set 2 around the roller set 2. The left end portion is connected to the pipe connecting portion 32 of the pipe connecting member 3 positioned at left side, and the right end portion is connected to the pipe connecting portion 32 of the pipe connecting member 3 positioned at right side.

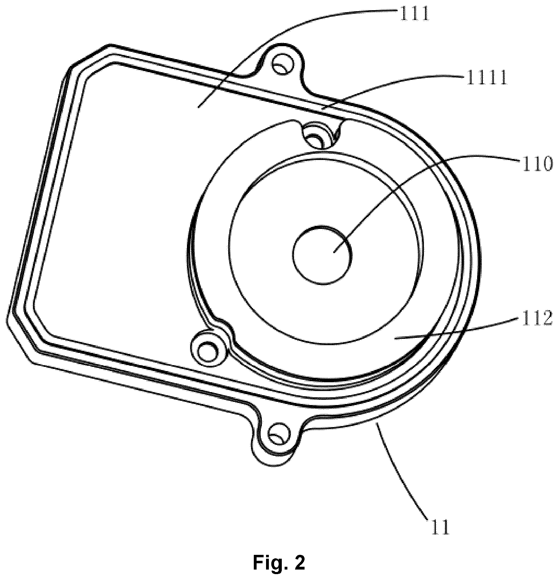

In some embodiments, referring to Fig. 1, Fig. 2 and Fig. 3, considering that the base 11 is convenient to be connected with the pump housing 12 and is convenient for receiving the roller set 2, the base 11 includes a supporting portion 111 connected with the pump housing 12 and a receiving portion 112 extending upward from the supporting portion 111 and configured to receive the roller set 2. The receiving portion is provided with a through-hole 110 through which the power assembly passes. In some embodiments, considering the tightness of the connection between the base 11 and the pump housing 12, a second sealing rib 1111 is disposed on a top wall of the supporting portion 111. A second sealing groove 125 cooperating with the second sealing rib 1111 is provided on the pump housing 12. In some embodiments, the supporting portion 111 is of cover-shaped. A second sealing rib 1111 is disposed along an outer periphery of the top wall of the supporting portion. The receiving portion 112 is a circular ring and formed by extending upwards from a rear portion (that is, the right end in Fig. 2) of the top wall of the supporting portion 111. The inside of the receiving portion 112 is formed as a receiving cavity, and a bottom wall in the receiving cavity has a through-hole 110 passing through in the up-down direction.

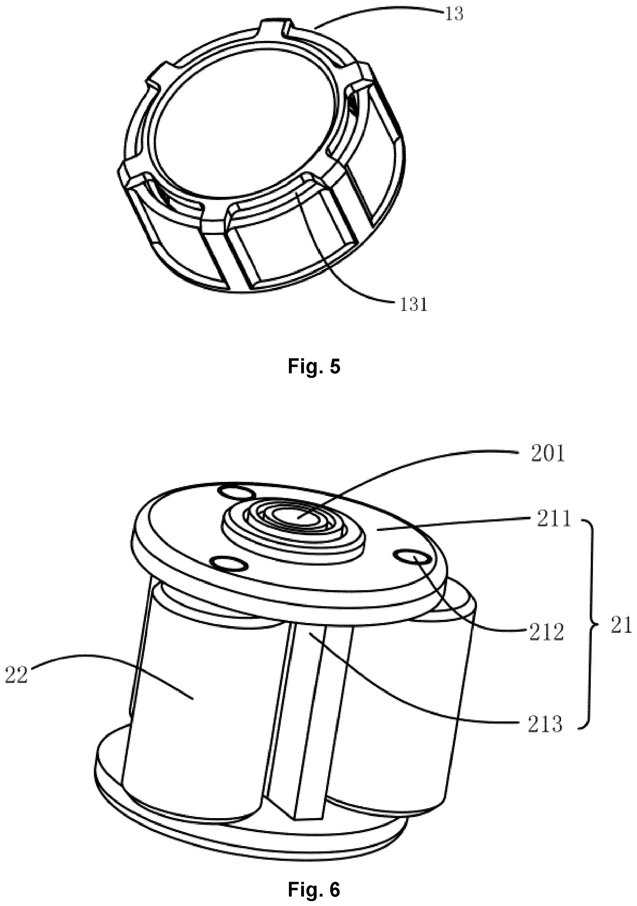

In some embodiments, referring to Fig. 1 and Fig. 5, the top cover 13 is a cylindrical cover. A communication hole 131 is disposed on a top of the top cover 13. The top cover 13 is adapted to be connected with the pump housing 12. In some embodiments, an inner side wall of the top cover 13 is provided with internal threads, the annular wall 1231 is provided with external threads, and the top cover 13 is in threaded connection with the pump housing 12.

In some embodiments, referring to Fig. 1, Fig. 4 and Fig. 10, considering that it is convenient to drain the liquid medium in the pump housing 12 in time when the liquid medium leaks due to the fact that the pump body hose is broken, the connecting wall 1232 is provided with a positioning column 1233, a first fixing hole 1234, a through hole 610 and a sealing bulge 1237. The positioning column 1233 extends vertically downward from an inner center of the connecting wall 1232, and the sealing bulge 1237 is a circular ring and formed by extending upward from the connecting wall 1232. In some embodiments, a second limiting groove 124 cooperating with the sealing member 4 is formed on an inner end portion of the extending portion 122. In some embodiments, a second limiting groove 124 with an open front end and lower end is formed on an inner front portion of the extending portion 122, and first sealing ribs 1241 are formed on a top wall and both side walls of the second limiting groove 124. A second limiting hole 1242 is formed on a rear end wall of the second limiting groove 124. The second limiting hole 1242 is a rectangular hole with an open lower end. A second sealing groove 125 is formed on a lower end face of the pump housing 12. The second sealing groove 125 is adapted to cooperate with the second sealing rib 1111.

In some embodiments, referring to Fig. 1, Fig. 6 and Fig. 7, in order to facilitate the roller set 2 to rotatably squeeze the pump body hose to pump the liquid medium, the roller set 2 includes a roller bracket 21 and multiple rollers 22 connected to the roller bracket 21. The roller bracket 21 includes two cover plates 211 disposed in parallel up and down, a connecting plate 213 connected between the two cover plates 211, and multiple rotating shafts 212 vertically connected between the two cover plates 211 and spaced apart along a circumferential direction of the cover plates 211. Each roller 22 is correspondingly sleeved on each rotating shaft 212.

In some embodiments, the roller set 2 includes a roller bracket 21 and three rollers 22, and the two cover plates 211 are horizontal circular plates disposed in parallel up and down. In some embodiments, the two cover plates 211 include an upper cover plate 211 and a lower cover plate 211 arranged in parallel. The upper cover plate 211 is provided with a positioning hole 201 connected with the pump housing 12. The lower cover plate 211 is provided with a matching hole 202 cooperating with the base 11 and the power assembly. The positioning hole 201 penetrates the upper cover plate 211, and the matching hole 202 penetrates the lower cover plate 211. The three rotating shafts 212 are vertically connected between the two cover plates 211 and spaced apart in the circumferential direction of each cover plate 211. The three rollers 22 are each cylindrical and sleeved on the three rotating shafts 212 correspondingly. The roller set 2 is adapted to be mounted in the base 11 and the pump housing 12. In some embodiments, the roller set 2 is mounted in the mounting portion 121 of the pump housing 12. The upper cover plate is sleeved on the positioning column 1233 through the positioning hole 201.

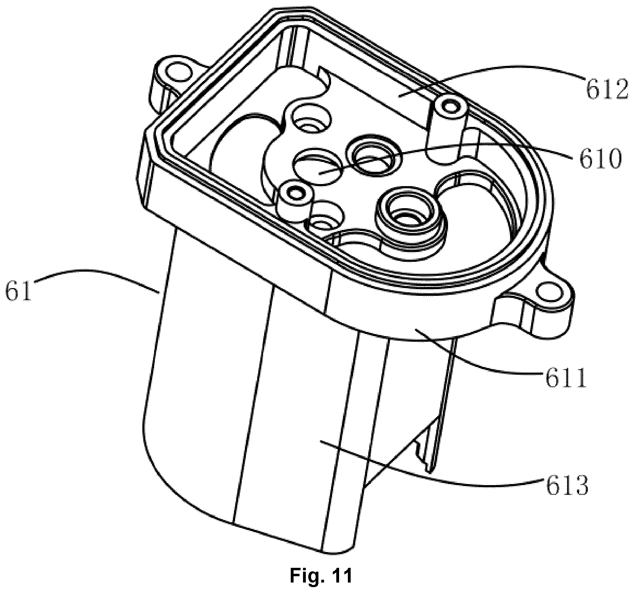

In some embodiments, referring to Fig. 1 and Fig. 11, the power assembly includes a mounting shell 6 and a power device 7 accommodated in the mounting shell 6. The power device 7 includes a transmission device 72 passing through the base 11 and connected with the roller set 2 and a driving member 71 drivingly connected with the transmission device 72. The driving member 71 has a transmission shaft 711 matching with the transmission device 72. In some embodiments, the mounting shell 6 includes a shell body 61 and a shell bottom assembly 62 connected to a bottom of the shell body 61. The shell body 61 includes a substrate 611, an upper shell 612 connected to a top of the substrate 611 and configured to mount the transmission device 72, and a lower shell 613 connected to a bottom of the substrate 611 and configured to mount the driving member 71. The substrate 611 is provided with a through hole 610 through which the transmission shaft 711 passes. The base plate 611, the upper shell 612 and the lower shell 613 are formed integrally. The upper shell 612 is disposed on the top of the substrate 611 and defines an upper mounting cavity with a top wall of the substrate 611. The lower shell 613 is disposed on the bottom of the substrate 611 and defines a lower mounting cavity with a bottom wall of the substrate 611. The through hole 610 communicates with the upper mounting cavity and the lower mounting cavity.

In some embodiments, the transmission device 72 includes a gear set composed of inter-meshing multi-stage gears and matching the roller set 2 and the driving member 71 for transmission. In some embodiments, the transmission device 72 is disposed in the upper mounting cavity. The driving member 71 is disposed in the lower mounting cavity and is a motor. The motor has a transmission shaft 711 extending vertically upward. The transmission shaft 711 is adapted to pass upward through the through hole 610 and is power-connected with the transmission device 72.

In some embodiments, the shell bottom assembly 62 includes a bottom pad 621 disposed below the driving member 71, a circuit board 622 disposed below the bottom pad 621 and electrically connected with the driving member 71, and a bottom cover 623 disposed below the circuit board 622 and configured to cover the lower shell 613. Understandably, the shell bottom assembly 62 is arranged on a bottom of the shell body 61 and includes a bottom pad 621, a circuit board 622 and a bottom cover 623 disposed in order from top to bottom.

It is to be noted that the housing assembly 1 in the some embodiments of the present disclosure includes a base 11, a pump housing 12 and a top cover 13. Understandably, the pump body assembly includes the housing assembly 1, a roller set 2, a pipe connecting member 3, a pump body hose (not shown in the figure), a sealing member 4, and a valve core member 5. In some embodiments, the power assembly is adapted to be mounted below the pump body assembly. In some embodiments, the base 11 of the pump body assembly is fixed on the upper shell 612 of the mounting shell 6.

Some embodiments of the present disclosure also provide a sprinkler system, which includes the foregoing pump.

Some embodiments of the present disclosure also provide an unmanned aerial vehicle, which includes the foregoing sprinkler system.

The above are only some embodiments of the present disclosure and are not intended to limit the present disclosure. The scope of the present invention is solely limited by the appended claims.

## Claims

1. A pump body assembly, comprising:
a pump housing (12), provided with a drainage outlet (1235) for discharging liquid;
**characterized by**
a valve core member (5) comprising a fixing portion (52) and a valve body portion (51) connected with the fixing portion, the fixing portion (52) being fixed to the pump housing, the valve body portion (51) being elastic, and the valve body portion (51) being changeable from a natural state to an elastic deformation state under an action of liquid in the pump housing, wherein when the valve body portion (51) is in the natural state, the valve body portion (51) seals the drainage outlet (1235) of the pump housing, and when the valve body portion (51) is in the elastic deformation state, the valve body portion (51) does not seal the drainage outlet (1235) of the pump housing (12).

2. The pump body assembly as claimed in claim 1, wherein the fixing portion (52) and the valve body portion (51) are formed integrally.

3. The pump body assembly as claimed in claim 1, wherein a side surface of the valve body portion (51) facing the fixing portion (52) is a curved surface recessed toward the fixing portion (52).

4. The pump body assembly as claimed in any one of claims 1 to 3, wherein the fixing portion (52) comprises a first fixing portion (521) and a second fixing portion (522) spaced apart from the first fixing portion (521), the pump body assembly further comprises a roller set (2) rotatably mounted in the pump housing (12) and a pump body hose wound around the roller set (2) for squeezing the roller set (2), a first fixing hole (1234) corresponding to the first fixing portion (521) and a second fixing hole (1236) corresponding to the second fixing portion (522) are provided on the pump housing (12), the first fixing hole (1234) and the second fixing hole (1236) are located on both sides of the roller set (2) , the first fixing portion (521) is fixed to the first fixing hole (1234), and the second fixing portion (522) is fixed to the second fixing hole (1236).

5. The pump body assembly as claimed in claim 4, wherein the pump housing (12) comprises an annular wall (1231) and a connecting wall (1232) connected with the annular wall (1231), and the connecting wall (1232) is provided with the first fixing hole (1234), the second fixing hole (1236) and the drainage outlet (1235).

6. The pump body assembly as claimed in claim 5, wherein the pump body assembly further comprises a sealing bulge (1237) disposed on the connecting wall (1232), and when the valve body portion (51) is in the natural state, the valve body portion (51) is overlapped with the sealing bulge (1237) to seal the drainage outlet (1235) of the pump housing (12).

7. The pump body assembly as claimed in claim 5, further comprising a top cover (13), wherein the top cover (13) is detachably connected with an outer side of the annular wall (1231), and the top cover (13) is provided with a communication hole (131) for draining liquid.

8. The pump body assembly as claimed in claim 7, further comprising a base (11), the base (11) being connected to a bottom of the pump housing (12) to form a mounting cavity between the pump housing (12) and the base (11), the pump body assembly further comprising a sealing member (4) sandwiched between the base (11) and the pump housing (12) and configured to seal the pump housing (12) and the base (11).

9. A pump, comprising the pump body assembly as claimed in any one of claims 1 to 8.

10. A sprinkler system, comprising the pump as claimed in claim 9.

11. An unmanned aerial vehicle, comprising the sprinkler system as claimed in claim 10.

## Patentansprüche

1. Pumpenkörperanordnung, die Folgendes umfasst:
ein Pumpengehäuse (12), das mit einem Abflussauslass (1235) zum Ableiten von Flüssigkeit versehen ist; **gekennzeichnet durch**
ein Ventileinsatzelement (5), das
einen Befestigungsabschnitt (52) und einen Ventilkörper
abschnitt (51) umfasst, der mit dem Befestigungsabschnitt verbunden ist, wobei der Befestigungsabschnitt (52) an dem Pumpengehäuse befestigt ist, der Ventilkörperabschnitt (51) elastisch ist und der Ventilkörperabschnitt (51) von einem natürlichen Zustand in einen elastischen Verformungszustand unter Einwirkung von Flüssigkeit in dem Pumpengehäuse änderbar ist, wobei, wenn sich der Ventilkörperabschnitt (51) in dem natürlichen Zustand befindet, der Ventilkörperabschnitt (51) den Abflussauslass (1235) des Pumpengehäuses abdichtet, und wenn der Ventilkörperabschnitt (51) in dem elastischen Verformungszustand ist, der Ventilkörperabschnitt (51) den Abflussauslass (1235) des Pumpengehäuses (12) nicht abdichtet.

2. Pumpenkörperanordnung nach Anspruch 1, wobei der Befestigungsabschnitt (52) und der Ventilkörperabschnitt (51) aus einem Stück ausgebildet sind.

3. Pumpenkörperanordnung nach Anspruch 1, wobei eine Seitenoberfläche des Ventilkörperabschnitts (51), die dem Befestigungsabschnitt (52) zugewandt ist, eine gekrümmte Oberfläche ist, die in Richtung des Befestigungsabschnitts (52) vertieft ist.

4. Pumpenkörperanordnung nach einem der Ansprüche 1 bis 3, wobei der Befestigungsabschnitt (52) einen ersten Befestigungsabschnitt (521) und einen zweiten Befestigungsabschnitt (522) umfasst, der von dem ersten Befestigungsabschnitt (521) beabstandet ist, die Pumpenkörperanordnung ferner einen Rollensatz (2), der in dem Pumpengehäuse (12) drehbar montiert ist, und einen Pumpenkörperschlauch umfasst, der zum Zusammendrücken des Rollensatzes (2) um den Rollensatz (2) gewickelt ist, ein erstes Befestigungsloch (1234), das dem ersten Befestigungsabschnitt (521) entspricht, und ein zweites Befestigungsloch (1236), das dem zweiten Befestigungsabschnitt (522) entspricht, an dem Pumpengehäuse (12) bereitgestellt sind, sich das erste Befestigungsloch (1234) und das zweite Befestigungsloch (1236) auf beiden Seiten des Rollensatzes (2) befinden, der erste Befestigungsabschnitt (521) an dem ersten Befestigungsloch (1234) befestigt ist und der zweite Befestigungsabschnitt (522) an dem zweiten Befestigungsloch (1236) befestigt ist.

5. Pumpenkörperanordnung nach Anspruch 4, wobei das Pumpengehäuse (12) eine ringförmige Wand (1231) und eine Verbindungswand (1232) umfasst, die mit der ringförmigen Wand (1231) verbunden ist, und die Verbindungswand (1232) mit dem ersten Befestigungsloch (1234), dem zweiten Befestigungsloch (1236) und dem Abflussauslass (1235) versehen ist.

6. Pumpenkörperanordnung nach Anspruch 5, wobei die Pumpenkörperanordnung ferner eine Dichtungswulst (1237) umfasst, die an der Verbindungswand (1232) angeordnet ist, und wenn sich der Ventilkörperabschnitt (51) in dem natürlichen Zustand befindet, der Ventilkörperabschnitt (51) mit dem Dichtungswulst (1237) überlappt, um den Abflussauslass (1235) des Pumpengehäuses (12) abzudichten.

7. Pumpenkörperanordnung nach Anspruch 5, die ferner eine obere Abdeckung (13) umfasst, wobei die obere Abdeckung (13) mit einer äußeren Seite der ringförmigen Wand (1231) lösbar verbunden ist und die obere Abdeckung (13) mit einem Verbindungsloch (131) zum Abfließenlassen von Flüssigkeit versehen ist.

8. Pumpenkörperanordnung nach Anspruch 7, die ferner eine Basis (11) umfasst, wobei die Basis (11) mit einem Boden des Pumpengehäuses (12) verbunden ist, um einen Montagehohlraum zwischen dem Pumpengehäuse (12) und der Basis (11) auszubilden, wobei die Pumpenkörperanordnung ferner ein Dichtungselement (4) umfasst, das zwischen der Basis (11) und dem Pumpengehäuse (12) eingerichtet ist und konfiguriert ist, um das Pumpengehäuse (12) und die Basis (11) abzudichten.

9. Pumpe, die die Pumpenkörperanordnung nach einem der Ansprüche 1 bis 8 umfasst.

10. Sprinklersystem, das die Pumpe nach Anspruch 9 umfasst.

11. Drohne, die das Sprinklersystem nach Anspruch 10 umfasst.

## Revendications

1. Ensemble corps de pompe, comprenant :
un boîtier de pompe (12), pourvu d'une sortie de drainage (1235) permettant la décharge du liquide ; **caractérisé par**
un élément de noyau de soupape (5) comprenant
une partie fixation (52) et une partie corps de soupape (51) reliée à la partie fixation, la partie fixation (52) étant fixée au boîtier de pompe, la partie corps de soupape (51) étant élastique, et la partie corps de soupape (51) pouvant passer d'un état naturel à un état de déformation élastique sous l'action d'un liquide dans le boîtier de pompe, lorsque la partie corps de soupape (51) est à l'état naturel, la partie corps de soupape (51) scellant la sortie de drainage (1235) du boîtier de pompe, et lorsque la partie corps de soupape (51) est dans l'état de déformation élastique, la partie corps de soupape (51) ne scellant pas la sortie de drainage (1235) du boîtier de pompe (12).

2. Ensemble corps de pompe selon la revendication 1, la partie fixation (52) et la partie corps de soupape (51) étant formées d'un seul tenant.

3. Ensemble corps de pompe selon la revendication 1, une surface latérale de la partie corps de soupape (51) faisant face à la partie fixation (52) étant une surface incurvée en retrait vers la partie fixation (52).

4. Ensemble corps de pompe selon l'une quelconque des revendications 1 à 3, la partie fixation (52) comprenant une première partie fixation (521) et une seconde partie fixation (522) espacée de la première partie fixation (521), l'ensemble corps de pompe comprenant en outre un jeu de rouleaux (2) monté de manière rotative dans le boîtier de pompe (12) et un tuyau de corps de pompe enroulé autour du jeu de rouleaux (2) permettant de serrer le jeu de rouleaux (2), un premier trou de fixation (1234) correspondant à la première partie fixation (521) et un second trou de fixation (1236) correspondant à la seconde partie fixation (522) étant prévus sur le boîtier de pompe (12), le premier trou de fixation (1234) et le second trou de fixation (1236) étant situés des deux côtés du jeu de rouleaux (2), la première partie fixation (521) étant fixée au premier trou de fixation (1234), et la seconde partie fixation (522) étant fixée au second trou de fixation (1236).

5. Ensemble corps de pompe selon la revendication 4, le boîtier de pompe (12) comprenant une paroi annulaire (1231) et une paroi de raccordement (1232) reliée à la paroi annulaire (1231), et la paroi de raccordement (1232) étant pourvue du premier trou de fixation (1234), du second trou de fixation (1236) et de la sortie de drainage (1235).

6. Ensemble corps de pompe selon la revendication 5, l'ensemble corps de pompe comprenant en outre un renflement d'étanchéité (1237) disposé sur la paroi de raccordement (1232), et lorsque la partie corps de soupape (51) est à l'état naturel, la partie corps de soupape (51) chevauchant le renflement d'étanchéité (1237) pour sceller la sortie de drainage (1235) du boîtier de pompe (12).

7. Ensemble corps de pompe selon la revendication 5, comprenant en outre un couvercle supérieur (13), le couvercle supérieur (13) étant relié de manière amovible à un côté extérieur de la paroi annulaire (1231), et le couvercle supérieur (13) étant prévu avec un trou de communication (131) permettant le drainage du liquide.

8. Ensemble corps de pompe selon la revendication 7, comprenant en outre une base (11), la base (11) étant reliée à un fond du boîtier de pompe (12) pour former une cavité de montage entre le boîtier de pompe (12) et la base (11), l'ensemble corps de soupape comprenant en outre un élément d'étanchéité (4) pris en sandwich entre la base (11) et le boîtier de pompe (12) et conçu pour sceller le boîtier de pompe (12) et la base (11).

9. Pompe, comprenant l'ensemble corps de pompe selon l'une quelconque des revendications 1 à 8.

10. Système d'arrosage, comprenant la pompe selon la revendication 9.

11. Véhicule aérien sans pilote, comprenant le système d'arrosage selon la revendication 10.
